# EUROPÄISCHE PATENTANMELDUNG

(11) **EP 4 496 191 A1**
(43) Veröffentlichungstag der Anmeldung: **22.01.2025**
(21) Anmeldenummer: 23197991.5
(22) Anmeldetag: 18.09.2023
(51) Int. Cl.: H02K 5/15, H02K 5/22, H02K 7/102

(54) **ANORDNUNG FÜR EINEN ELEKTROMOTOR SOWIE HERSTELLUNGSVERFAHREN DAFÜR**

(71) Anmelder: Siemens Aktiengesellschaft, 80333 München (DE)
(72) Erfinder: Eckert, Frank, 97647 Hausen (DE); Dippert, Jessica, 97631 Bad Königshofen i. Grabfeld (DE); Dölz, Volker, 97616 Bad Neustadt (DE); Handwerker, Michael, 97653 Bischofsheim (DE); Thometschek, Florian, 97720 Nüdlingen (DE); Wehner, Nicole, 97618 Strahlungen (DE)
(74) Vertreter: Siemens Patent Attorneys

(57) **Zusammenfassung**

Die Erfindung betrifft eine Anordnung (12) für einen Elektromotor (10) mit zumindest einer elektronischen Einbaukomponente (16) an einem Lagerschild (22) des Elektromotors (10), wobei an dem Lagerschild (22) eine erste Steckerkomponente (24) ausgebildet ist, welche mit einer zweiten Steckerkomponente (26) an der Einbaukomponente (16) korrespondiert, wobei die erste Steckerkomponente (24) mit einer an einer Außenseite (28) des Lagerschilds (22) ausgebildeten Verbindungskomponente (30) elektrisch gekoppelt ist. Ferner betrifft die Erfindung ein Verfahren zum Herstellen einer Anordnung (12).

## Beschreibung

Die Erfindung betrifft eine Anordnung für einen Elektromotor mit zumindest einer elektronischen Einbaukomponente an einem Lagerschild des Elektromotors. Ferner betrifft die Erfindung ein entsprechendes Herstellungsverfahren zum Herstellen einer Anordnung.

Bei sogenannten Permanentmagneterregten-Elektromotoren werden Federdruckbremsen oder Permanentmagnetbremsen üblicherweise über zwei an der Bremsenspule kontaktierte Anschlussleitungen an die Spannungsversorgung angeschlossen. Die Anschlussleitungen an den Bremsen und an der Gegenseite, insbesondere von Motorsteckern oder der sogenannten Kundenanschlussleitung, sind üblicherweise biegeschlaffe Leitungen, die in einer automatischen Montage nicht kontaktiert werden können.

Die Verlegung und Kontaktierung der biegeschlaffen Bremsenanschlussleitungen inklusive erforderlicher Verschlussstopfen, beispielsweise zum Schutz des Geberraumes vor Bremsenabrieb, für die Leitungsdurchführung im Lagerschild erfolgt bisher manuell, zum Beispiel mit sogenannten Stoßverbindern für die Kontaktierung. Hierbei handelt es sich um einen manuellen Crimp-Prozess, bei dem die beiden Leitungsenden, von Bremsenseite und von Motorsteckerseite oder freier Kundenanschlussleitung, in eine isolierte Crimphülse eingeführt und jeweils mit einer Spezialzange gecrimpt werden. Da bei dieser Kontaktierung unter anderem die Gefahr von herausstehenden Einzellitzen gegeben ist, wird zusätzlich ein Isolierschlauch über die Stoßverbinder geschoben und mit einem Kabelbinder befestigt. Zudem unterliegt die Reproduzierbarkeit der Qualität der Crimp-Verbindung durch den manuellen Prozess gewissen Schwankungen.

Aufgabe der vorliegenden Erfindung ist es, eine Anordnung sowie ein Verfahren zu schaffen, mittels welchen ein automatisierter Verbau einer Einbaukomponente des Elektromotors realisiert werden kann.

Diese Aufgabe wird durch eine Anordnung sowie durch ein Verfahren zum Herstellen einer Anordnung gemäß den unabhängigen Patentansprüchen gelöst. Vorteilhafte Ausgestaltungsformen sind in den Unteransprüchen angegeben.

Ein Aspekt der Erfindung betrifft eine Anordnung für einen Elektromotor mit zumindest einer elektronischen Einbaukomponente an einem Lagerschild des Elektromotors.

Es ist dabei vorgesehen, dass an einem Lagerschild der Anordnung eine erste Steckerkomponente ausgebildet ist, welche mit einer zweiten Steckerkomponente an der Einbaukomponente korrespondiert, wobei die erste Steckerkomponente mit einer an einer Außenseite des Lagerschilds ausgebildeten Verbindungskomponente elektrisch gekoppelt ist.

Der Elektromotor ist bevorzugt als Servomotor ausgebildet.

Insbesondere durch die beiden Steckerkomponenten kann somit eine Anordnung geschaffen werden, welche ein automatisiertes Koppeln der Einbaukomponente mit dem Lagerschild ermöglicht. Somit kann ein manueller Prozess entfallen, und somit die Nachteile im Stand der Technik entsprechend überwunden werden. Insbesondere kann somit weniger Montageaufwand in der Endmontage u. a., da die Crimp-Verbindungen entfallen, realisiert werden. Des Weiteren ist ein reduziertes Fehlerpotenzial bei der elektrischen Kontaktierung durch den Entfall von manuellem Crimp-Prozess vorhanden. Ferner kann eine automatische Montage mit Kontaktierung der Einbaukomponente ermöglicht werden. Der Einsatz der universellen Steckerkomponenten kann über mehrere Motorbaureihen realisiert werden. Des Weiteren kann eine Kombination von einer Lagerschild- und Einbaukomponentenausführung mit verschiedenen Einbauvarianten realisiert werden. Ein Verschlussstopfen zum Schutz des Geberraums vor Bremsenabrieb kann insbesondere auch durch den Einsatz der Steckerkomponente entfallen.

Gemäß einer vorteilhaften Ausgestaltungsform ist die Einbaukomponente als elektrischer Geber des Elektromotors ausgebildet. Beispielsweise kann dann die Verbindungskomponente als Versorgungsleitung sowie Steuerleitung für den elektrischen Geber ausgebildet sein. Dadurch ist es ermöglicht, dass ein automatisierter Betrieb des elektrischen Gebers in einem Gehäuse des Elektromotors beziehungsweise am Lagerschild realisiert werden kann.

Eine weitere vorteilhafte Ausgestaltungsform sieht vor, dass die Einbaukomponente als elektrische Bremse des Elektromotors ausgebildet ist. Insbesondere kann somit eine elektrische Bremse des Elektromotors als Einbaukomponente mit der Verbindungskomponente automatisiert gekoppelt werden. Dadurch ist eine einfache Montage der Bremse des Elektromotors realisiert.

Ebenfalls vorteilhaft ist, wenn ein Spulenkörper der Bremse mit einem ersten Ende des Spulenkörpers und einem zweiten Ende des Spulenkörpers mit der zweiten Steckerkomponente gekoppelt ist. Insbesondere kann somit die Bremse mit einem Pluspol und einem Minuspol mit der Steckerkomponente gekoppelt sein. Die Steckerkomponente kann dann wiederum mit der Verbindungskomponente entsprechend eine Spannung erhalten, so dass die Bremse entsprechend angesteuert werden kann. Dadurch ist es auf einfache Art und Weise ermöglicht, die Bremse entsprechend zu bestromen.

Es hat sich weiterhin als vorteilhaft erwiesen, wie die zweite Steckerkomponente innerhalb einer radialen Ausdehnung der Bremse ausgebildet ist. Insbesondere weist die Bremse einen sogenannten Bremsengrundkörper auf. Der Bremsengrundkörper ist im Wesentlichen rund. Insbesondere befindet sich dann wiederum die Steckerkomponente im Wesentlichen innerhalb dieser runden Ausdehnung der Bremse. Insbesondere ist es dadurch ermöglicht, dass an dem Bremsenkörper bereits der zweite Steckerkörper angeordnet ist, wodurch bauraumsparend die Bremse im Gehäuse angeordnet werden kann.

Ebenfalls vorteilhaft ist, wenn das erste Ende und das zweite Ende direkt mit dem Spulenkörper gekoppelt sind. Dies bedeutet insbesondere, dass keine Zwischenleitungen zwischen dem ersten Ende und dem zweiten Ende, insbesondere des Spulenkörpers und der zweiten Steckerkomponente vorliegen. Beispielsweise können hierzu die Steckerkomponente und der Spulenkörper entsprechend über elektrische Verbindungen, beispielsweise Lötverbindungen oder Schweißverbindungen, miteinander kontaktiert sein. Mit anderen Worten ist in diesem Ausführungsbeispiel eine Zwischenleitung zwischen dem Spulenkörper und der Steckerkomponente vorgesehen. Dies ermöglicht insbesondere eine direkte Verbindung des Spulenkörpers mit der Verbindungskomponente. Somit kann auf einfache Art und Weise und dennoch zuverlässig die Anordnung bereitgestellt werden.

Es hat sich weiterhin als vorteilhaft erwiesen, wenn die zweite Steckerkomponente außerhalb einer radialen Ausdehnung der Bremse ausgebildet ist. Insbesondere ist somit die zweite Steckerkomponente außen an dem Bremsgrundkörper ausgebildet. Hierbei kann dann ein aufgeschraubtes Kunststoffteil direkt als Steckergehäuse zur Aufnahme von Kontaktpins ausgeführt sein, oder es kann als Halterung für einen geeigneten Katalogstecker ausgeführt sein, der zum Beispiel durch Einschnappen oder Verrastung/formschlüssige Fixierung befestigt wird. Dadurch kann auf einfache Art und Weise die zweite Steckerkomponente an dem Bremsengrundkörper angeordnet werden, ohne entsprechend Veränderungen am Bremsengrundkörper vornehmen zu müssen.

In einer weiteren vorteilhaften Ausgestaltungsform ist vorgesehen, dass die zweite Steckerkomponente über zumindest zwei gecrimpte Leitungen mit einem Spulenkörper der Bremse gekoppelt ist. Insbesondere können beispielsweise die entsprechenden Kontaktpins in dem bremsenseitigen Steckergehäuse, mit anderen Worten der zweiten Steckerkomponente, über Crimp-Verbindungen an den mit den beiden Spulenanschlüssen verbundenen Kabeln der Bremse kontaktiert sein. Die Verbindungskomponente kann somit entweder, wie bereits über einen vormontierten Gegenstecker mit der Lagerschildmontage automatisch kontaktiert werden, oder der vorkonfektionierte Gegenstecker bzw. die erste Steckerkomponente an der Kundenanschlussseite kann in einem manuellen Prozess einfach eingesteckt werden. Diese Variante ermöglicht Bremsenanschlüsse für eine Teilautomatisierung, da an dem automatisch montierbaren Läufer mit Bremse keine biegeschlaffen Leitungen mehr vorhanden sind.

Ebenfalls vorteilhaft ist, wenn die Bremse als Feststellbremse für den Motor ausgebildet ist. Mit anderen Worten, kann vorgesehen sein, dass bei einer Nichtbestromung des Elektromotors die Feststellbremse die Achse entsprechend bremst, so dass diese bei Nichtbestromung entsprechend in einer festen Position gehalten ist.

Ebenfalls vorteilhaft ist, wenn die Bremse als arbeits- oder ruhestrombetätigte Bremse für den Elektromotor ausgebildet ist. Insbesondere bei beispielsweise der elektrisch betätigten Bremse bleibt die Bremse bei anliegender Spannung gelöst, und es fließt der sogenannte Ruhestrom. Bei Stromausfall, Drahtbruch oder gezielter Betätigung tritt die Funktionswirkung ein, indem die Bremse greift. Somit kann sicher der Elektromotor betrieben werden.

Ferner hat es sich als vorteilhaft erwiesen, wenn die zweite Steckerkomponente mit zumindest zwei Schneidkontakten ausgebildet ist. Auf Basis der Schneidkontakte kann somit ein einfacher Kopplungsprozess zwischen der ersten Steckerkomponente und der zweiten Steckerkomponente realisiert werden.

Es hat sich weiterhin als vorteilhaft erwiesen, wenn die erste Steckerkomponente größer ausgebildet ist, als die zweite Steckerkomponente, so dass ein Pufferbereich für ein Einstecken ausgebildet ist. Insbesondere kann so die zweite Steckerkomponente in radialer Richtung länglich ausgeführte Blade-Kontakte aufweisen, insbesondere so genannte Messerkontakte, um verschiedene Bremsengrößen in Verbindung mit einer einzigen Lagerschildvariante kombinieren und kontaktieren zu können. Die zweite Steckerkomponente kann dann an der Bremse dabei auf verschiedenen radialen Positionen ausgebildet sein. Somit können unterschiedliche Bremsen bzw. Einbaukomponenten mit der ersten Steckerkomponente kontaktiert werden, wodurch beispielsweise lediglich eine Variante des Lagerschilds mit einer Variante der ersten Steckerkomponente bereitgestellt werden kann, um eine Vielzahl von unterschiedlichen Einbaukomponenten koppeln zu können.

Ebenfalls vorteilhaft ist, wenn das Lagerschild eine Durchführung aufweist, wobei die erste Steckerkomponente durch die Durchführung durchgeführt ist. Dabei kann die erste Steckerkomponente derart ausgestaltet sein, dass diese im Wesentlichen die Durchführung abdichtet. Dadurch können beispielsweise hinter dem Lagerschild entsprechende Komponenten ausgeführt sein, beispielsweise Geberkomponenten, die vor einem Bremsabrieb geschützt sind, da die Durchführung entsprechend abgedichtet ist.

Ein weiterer Aspekt der Erfindung betrifft einen Elektromotor mit einer Anordnung nach dem vorhergehenden Aspekt.

Ferner betrifft die Erfindung auch ein Verfahren zum Herstellen einer Anordnung nach dem vorhergehenden Aspekt. Es erfolgt das Bereitstellen eines Lagerschilds mit einer ersten Steckerkomponente. Es wird die erste Steckerkomponente mit einer an einer Außenseite des Lagerschilds ausgebildeten Verbindungskomponente gekoppelt. Es wird eine elektrische Einbaukomponente mit einer zweiten Steckerkomponente bereitgestellt, welche mit der ersten Steckerkomponente korrespondiert. Es erfolgt das automatisierte Koppeln des Lagerschilds mit der Einbaukomponente über die Steckerkomponenten.

Somit kann ein automatisiertes Verfahren zum Verbinden der Einbaukomponente mit dem Lagerschild realisiert werden. Insbesondere kann dabei beispielsweise vorgesehen sein, dass ein optisches Positionieren des Lagerschilds durchgeführt wird und dann wiederum entsprechend die Kopplung durchgeführt wird.

Es kann ferner vorgesehen sein, dass entsprechend der Führungen am Lagerschild bzw. an den Steckerkomponenten Führungen bereitgestellt werden, welche ein sicheres Koppeln ermöglichen. Beispielsweise kann dies in Form einer sogenannten Poka-Yoke-Verbindung bereitgestellt werden.

Vorteilhafte Ausgestaltungsformen der Anordnung sind als vorteilhafte Ausgestaltungsformen des Elektromotors sowie des Verfahrens anzusehen. Die Anordnung sowie der Elektromotor weisen insbesondere gegenständliche Merkmale auf, um entsprechende Verfahrensschritte durchführen zu können.

Eine Verbindung zweier elektrischer oder elektronischer Komponenten kann, sofern nicht ausdrücklich anders angegeben, derart verstanden werden, dass eine elektrische Verbindung zwischen den Komponenten besteht oder durch Betätigung eines oder mehrerer Schaltelemente (der Schaltung/Anordnung/Gerät...) hergestellt werden kann. Insbesondere können die Komponenten direkt oder indirekt miteinander verbunden sein, sofern nicht anders angegeben. Dabei kann eine direkte Verbindung so verstanden werden, dass außer dem optionalen einen oder mehreren Schaltelementen keine weiteren elektrischen oder elektronischen Komponenten zwischen den Komponenten angeordnet sind, während eine indirekte Verbindung so verstanden werden kann, dass zusätzlich zu dem optionalen einen oder mehreren Schaltelementen eine oder mehrere weitere elektrische oder elektronische Komponenten, etwa Widerstände, Kondensatoren, Spulen und so weiter, zwischen den Komponenten angeordnet sind.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: eine schematische Schnittansicht einer Ausführungsform eines Elektromotors mit einer Ausführungsform einer Anordnung;
- FIG 2: eine schematische Perspektivansicht einer Ausführungsform einer Einbaukomponente;
- FIG 3: eine schematische Perspektivansicht einer Ausführungsform eines Lagerschilds;
- FIG 4: eine weitere schematische Perspektivansicht einer Ausführungsform eines Lagerschilds;
- FIG 5: eine weitere schematische Schnittansicht einer Ausführungsform eines Elektromotors mit einer Ausführungsform einer Anordnung;
- FIG 6: eine weitere schematische Schnittansicht einer Ausführungsform einer Einbaukomponente; und
- FIG 7: eine weitere schematische Schnittansicht einer Ausführungsform eines Elektromotors mit einer Ausführungsform einer Anordnung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

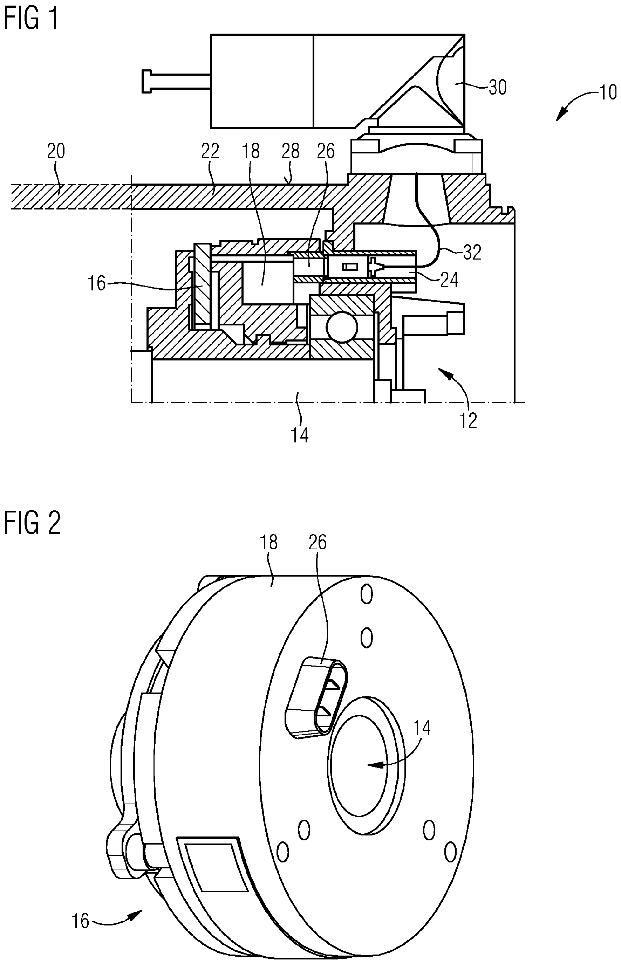

FIG 1 zeigt eine schematische Schnittansicht gemäß einer Ausführungsform eines Elektromotors 10 mit einer Ausführungsform einer Anordnung 12. Insbesondere ist der Elektromotor 10 lediglich zur Hälfte gezeigt, insbesondere ist dies anhand einer Drehachse 14 dargestellt.

Die Anordnung 12 weist zumindest eine Einbaukomponente 16 vorliegend insbesondere in Form einer Bremse 18 für den Elektromotor 10 auf. Die Einbaukomponente 16 ist wiederum an einem Lagerschild 22 des Elektromotors 10 ausgebildet.

An dem Lagerschild 22 der Anordnung 12 ist eine erste Steckerkomponente 24 vorgesehen, welche mit einer zweiten Steckerkomponente 26 an der Einbaukomponente 16 korrespondiert, wobei die erste Steckerkomponente 24 mit einer an einer Außenseite 28 des Lagerschilds 22 ausgebildeten Verbindungskomponente 30 elektrisch gekoppelt ist. Vorliegend ist hierbei insbesondere eine elektrische Leitung 32 vorgesehen, welche beispielsweise gecrimpt ausgebildet ist. Insbesondere weist jedoch die Verbindungskomponente 30 sowie die erste Steckerkomponente 24 zumindest zwei elektrische Leitungen auf, um beispielsweise Strom für die Einbaukomponente 16 bereitzustellen.

In FIG 1 ist insbesondere die Einbaukomponente 16 als Bremse 18 gezeigt. Alternativ kann beispielsweise auch die Einbaukomponente 16 als Geber des Elektromotors 10 ausgebildet sein.

FIG 2 zeigt eine schematische Perspektivansicht gemäß einer Ausführungsform der Einbaukomponente 16, insbesondere ausgebildet als Bremse 18. In folgendem Ausführungsbeispiel ist insbesondere ein nicht gezeigter Spulenkörper der Bremse 18 mit einem ersten Ende des Spulenkörpers und einem zweiten Ende des Spulenkörpers mit der zweiten Steckerkomponente 26 gekoppelt. Die zweite Steckerkomponente 26 ist dabei insbesondere innerhalb einer radialen Ausdehnung der Bremse 18, insbesondere innerhalb einer radialen Ausdehnung eines Bremsengrundkörpers der Bremse 18. Insbesondere ist dabei vorgesehen, dass das erste Ende und das zweite Ende des Spulenkörpers direkt mit der zweiten Steckerkomponente gekoppelt sind.

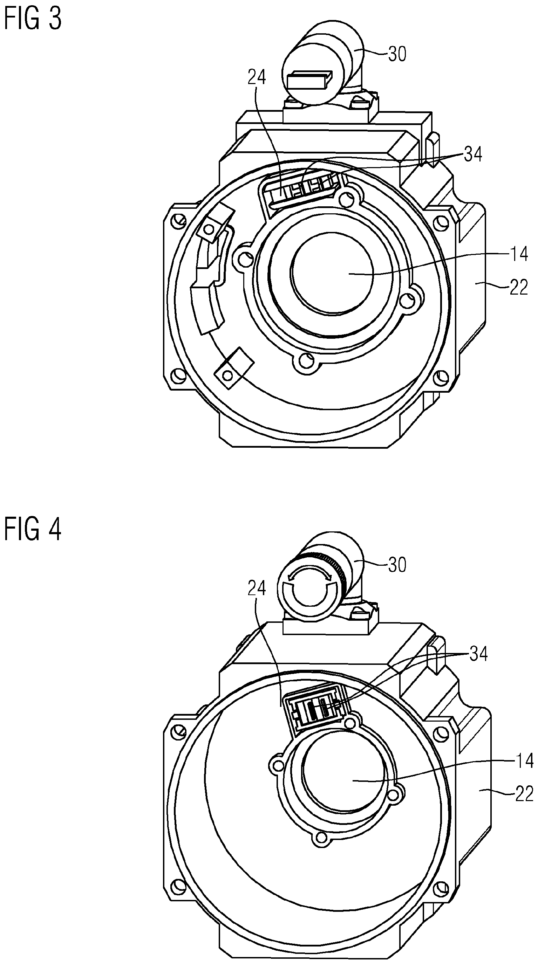

FIG 3 zeigt eine schematische Perspektivansicht des Lagerschilds 22 mit der ersten Steckerkomponente 24 sowie der Verbindungskomponente 30. Insbesondere zeigt die FIG 3 die das zur FIG 2 korrespondierende Lagerschild 22. Dabei kann der Spulenkörper in der Bremse 18 mit einer angespritzten zweiten Steckerkomponente 26 ausgeführt sein, in der die beiden Enden der Spulenwicklung mit beispielsweise Schneidklemmkontakten kontaktiert sind. Die Schneidklemmkontakte haben einen Klemmbereich, in den ein Gegenkontakt mit gewissem Kraftaufwand eingeschoben werden kann. Dieser Gegenkontakt ist wiederum am Lagerschild 22 ausgebildet. Im Lagerschild 22 ist wiederum der Gegenstecker vormontiert, der die beiden flachen Gegenkontakte beinhaltet und auch als sogenannte Blade-Kontakte bezeichnet werden kann. Die Blade-Kontakte mit elektrisch kontaktierte, beispielsweise gecrimpte, Verbindungsleitung sind bereits direkt mit der auf dem Lagerschild 22 vormontierten Verbindungskomponente 30 bzw. der sogenannten Kundenanschlussleitung elektrisch verbunden. Die Verbindungskomponente 30 kann dabei in Form eines Steckers oder auch als Kabelbaum bereitgestellt werden. Die auf beispielsweise dem Motorläufer vormontierte Bremse 18 ist derart positioniert, dass bei der axialen Montage die zweite Steckerkomponente 26 direkt in die erste Steckerkomponente 24 am Lagerschild 22 eintaucht und die Bremse 18 somit kontaktiert.

Die Bremse 18 kann dabei bevorzugt als Feststellbremse für den Elektromotor 10 ausgebildet sein. Alternativ oder ergänzend kann die Bremse 18 als arbeits- oder ruhestrombetätigte Bremse 18 für den Elektromotor 10 ausgebildet sein.

FIG 4 zeigt eine weitere schematische Perspektivansicht des Lagerschilds 22. Insbesondere ist im vorliegenden Ausführungsbeispiel gezeigt, dass die erste Steckerkomponente 24 größer ausgebildet ist, als die zweite Steckerkomponente 26, so dass ein Pufferbereich für ein Einstecken ausgebildet ist. Insbesondere zeigt somit die FIG 4 ein weiteres Ausführungsbeispiel für die Steckerkomponenten 24, 26. Insbesondere die erste Steckerkomponente 24 ist in radialer Richtung länglich ausgeführt, und weist die Blade-Kontakte auf, um verschiedene Bremsengrößen in Verbindung mit einer Lagerschildvariante kombinieren und kontaktieren zu können. Die zweite Steckerkomponente 26 an der Bremse 18 kann dabei auf verschiedenen radialen Positionen sein.

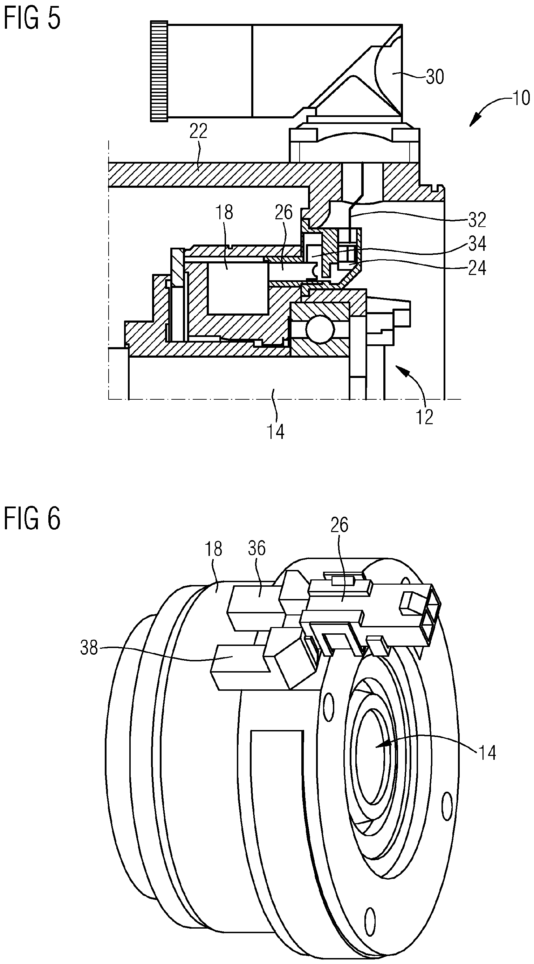

FIG 5 zeigt eine schematische Schnittansicht der Anordnung 12 mit einem Lagerschild gemäß FIG 4. Insbesondere sind die sogenannten Blade-Kontakte 34 entsprechend gezeigt.

FIG 6 zeigt eine weitere schematische Perspektivansicht einer Ausführungsform der Bremse 18. Im folgenden Ausführungsbeispiel ist insbesondere gezeigt, dass die zweite Steckerkomponente 26 außerhalb einer radialen Ausdehnung der Bremse 18 ausgebildet ist. Dabei kann die zweite Steckerkomponente 26 über zumindest zwei gecrimpte Leitungen 36 mit dem Spulenkörper der Bremse 18 gekoppelt sein.

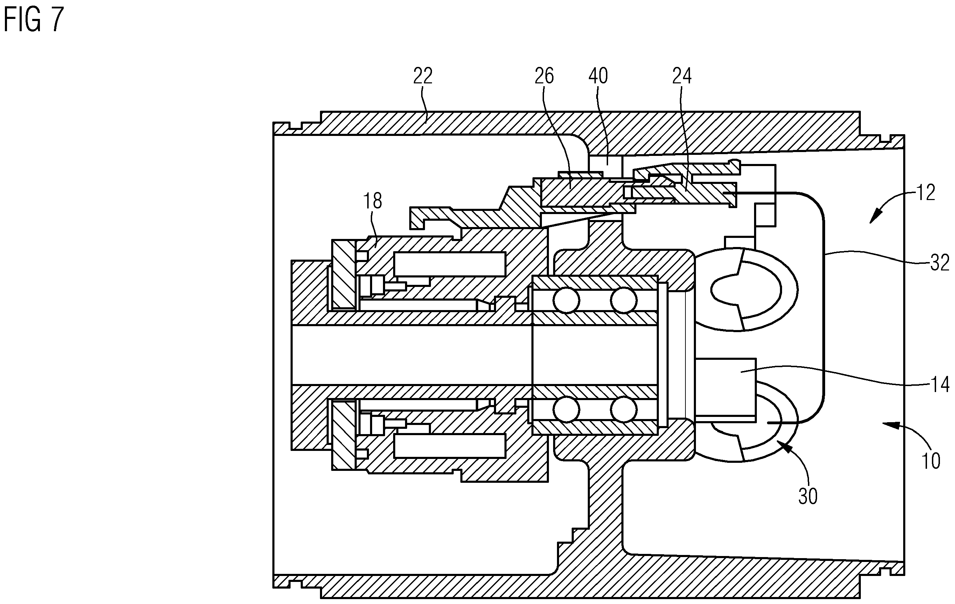

FIG 7 zeigt eine schematische Schnittansicht gemäß einer Ausführungsform des Elektromotors 10 mit einer Ausführungsform der Anordnung 12, insbesondere mit einer Bremse 18 gemäß FIG 6. Insbesondere ist hierbei gezeigt, dass außen auf dem Bremsengrundkörper der Bremse 18 die zweite Steckerkomponente 26 als aufgesetzter Stecker ausgebildet ist. Hierbei kann ein fixiertes Bauteil 38 direkt als Steckergehäuse zur Aufnahme der Kontaktpins ausgeführt sein, oder es kann als Halterung für einen geeigneten Katalogstecker ausgeführt sein, der zum Beispiel durch Einschnappen oder Verrastung/formschlüssige Fixierung befestigt wird. Die entsprechenden Kontaktpins in dem bremsenseitigen Steckergehäuse sind über Crimp-Verbindungen an den mit den beiden Spulenanschlüssen verbundenen Kabeln der Bremse 18 kontaktiert. Die Verbindungskomponente 30 kann somit entweder wie in den vorhergehenden Ausführungsbeispielen gezeigt ausgebildet sein und über einen vormontierten Gegenstecker mit der Lagerschildmontage automatisch kontaktiert werden, oder der vorkonfektionierte Gegenstecker an der Kundenanschlussseite kann in einem manuellen Prozess einfach eingesteckt werden. Diese Variante ermöglicht Bremsanschlüsse für eine Automatisierung, da an dem automatisch montierbaren Läufer die Bremse 18 keine biegeschlaffen Leitungen mehr vorhanden sind.

Die FIG 7 zeigt ferner, dass das Lagerschild 22 eine Durchführung 40 aufweist, wobei die erste Steckerkomponente 24 durch die Durchführung 40 durchgeführt ist, und insbesondere die Durchführung 40 kann durch zusätzliche Elemente abgedichtet werden, so dass beispielsweise ein Geber auf der der Einbaukomponente 16 abgewandten Seite des Lagerschilds 22 verbaut werden kann, und beispielsweise kein Bremsabrieb auf der Geberseite zu verzeichnen ist.

Ein weiterer Aspekt der Erfindung betrifft auch ein Verfahren zum Herstellen der Anordnung 12. Hierbei ist vorgesehen, dass das Lagerschild 22 mit der ersten Steckerkomponente 24 bereitgestellt wird. Es erfolgt das Koppeln der ersten Steckerkomponente 24 mit einer an der Außenseite 28 des Lagerschilds 22 ausgebildeten Verbindungskomponente 30. Es wird die elektrische Einbaukomponente 16 mit der zweiten Steckerkomponente 26 bereitgestellt, wobei die zweite Steckerkomponente 26 mit der ersten Steckerkomponente 24 korrespondiert. Es erfolgt dann ein automatisiertes Koppeln des Lagerschilds 22 mit der Einbaukomponente 16 über die Steckerkomponenten 24, 26. Beispielsweise kann hier ein optisches Positionieren des Lagerschilds 22 relativ zur Bremse 18 durchgeführt werden.

## Patentansprüche

1. Anordnung (12) für einen Elektromotor (10) mit zumindest einer elektronischen Einbaukomponente (16) in einem Lagerschild (22) des Elektromotors (10),
**dadurch gekennzeichnet, dass**
an dem Lagerschild (22) eine erste Steckerkomponente (24) ausgebildet ist, welche mit einer zweiten Steckerkomponente (26) an der Einbaukomponente (16) korrespondiert, wobei die erste Steckerkomponente (24) mit einer an einer Außenseite (28) des Lagerschilds (22) ausgebildeten Verbindungskomponente (30) elektrisch gekoppelt ist.

2. Anordnung (12) nach Anspruch 1, **dadurch gekennzeichnet,**
**dass**
die Einbaukomponente (16) als elektrischer Geber des Elektromotors (10) ausgebildet ist.

3. Anordnung (12) nach einem der Ansprüche 1 oder 2, **dadurch**
**gekennzeichnet, dass**
die Einbaukomponente (16) als elektrische Bremse (18) des Elektromotors (10) ausgebildet ist.

4. Anordnung (12) nach Anspruch 3, **dadurch gekennzeichnet,**
**dass**
ein Spulenkörper der Bremse (18) mit einem ersten Ende des Spulenkörpers und einem zweiten Ende des Spulenköpers mit der zweiten Steckerkomponente (26) gekoppelt ist.

5. Anordnung (12) nach Anspruch 3 oder 4, **dadurch gekennzeichnet, dass**
die zweite Steckerkomponente (26) innerhalb einer radialen Ausdehnung der Bremse (18) ausgebildet ist.

6. Anordnung (12) nach Anspruch 5, **dadurch gekennzeichnet,**
**dass**
das erste Ende und das zweite Ende direkt mit der zweiten Steckerkomponente (26) gekoppelt sind.

7. Anordnung (12) nach Anspruch 3 oder 4, **dadurch gekennzeichnet, dass**
die zweite Steckerkomponente (26) außerhalb einer radialen Ausdehnung der Bremse (18) ausgebildet ist.

8. Anordnung (12) nach Anspruch 7, **dadurch gekennzeichnet,**
**dass**
die zweite Steckerkomponente (26) über zumindest zwei gekrimpte Leitungen (36) mit einem Spulenkörper der Bremse (18) gekoppelt ist.

9. Anordnung (12) nach einem der Ansprüche 3 bis 8, **dadurch**
**gekennzeichnet, dass**
die Bremse (18) als Feststellbremse für den Elektromotor (10) ausgebildet ist.

10. Anordnung (12) nach einem der Ansprüche 3 bis 9, **dadurch**
**gekennzeichnet, dass**
die Bremse (18) als arbeits- oder ruhestrombetätigte Bremse (18) für den Elektromotor (10) ausgebildet ist.

11. Anordnung (12) nach einem der vorhergehenden Ansprüche,
**dadurch gekennzeichnet, dass**
die zweite Steckerkomponente (26) mit zumindest zwei Schneidkontakten (34) ausgebildet ist.

12. Anordnung (12) nach einem der vorhergehenden Ansprüche,
**dadurch gekennzeichnet, dass**
die erste Steckerkomponente (24) größer ausgebildet ist, als die zweite Steckerkomponente (26), so dass ein Pufferbereich für ein Einstecken ausgebildet ist.

13. Anordnung (12) nach einem der vorhergehenden Ansprüche,
**dadurch gekennzeichnet, dass**
die erste Steckerkomponente (24) mit der Verbindungskomponente (30) über zumindest zwei gekrimpte elektrische Leitungen (32) gekoppelt ist.

14. Anordnung (12) nach einem der vorhergehenden Ansprüche,
**dadurch gekennzeichnet, dass**
das Lagerschild (22) eine Durchführung (40) aufweist, wobei die erste Steckerkomponente (24) durch die Durchführung (40) durchgeführt ist.

15. Verfahren zum Herstellen einer Anordnung (12) nach einem der Ansprüche 1 bis 14, mit den Schritten:
- Bereitstellen eines Lagerschilds (22) mit einer ersten Steckerkomponente (24);
- Koppeln der ersten Steckerkomponente (24) mit einer an einer Außenseite (28) des Lagerschilds (22) ausgebildeten Verbindungskomponente (30);
- Bereitstellen einer elektrischen Einbaukomponente (16) der Anordnung (10) mit einer zweiten Steckerkomponente (26), welche mit der ersten Steckerkomponente (24) korrespondiert; und
- Automatisiertes Koppeln des Lagerschilds (22) mit der Einbaukomponenten (16) über die Steckerkomponenten (24, 26).

## Geänderte Patentansprüche

### Geänderte Patentansprüche gemäss Regel 137(2) EPÜ.

1. Anordnung (12) für einen Elektromotor (10) mit zumindest einer elektronischen Einbaukomponente (16) in einem Lagerschild (22) des Elektromotors (10),
**dadurch gekennzeichnet, dass**
an dem Lagerschild (22) eine erste Steckerkomponente (24) ausgebildet ist, welche mit einer zweiten Steckerkomponente (26) an der Einbaukomponente (16) korrespondiert, wobei die erste Steckerkomponente (24) mit einer an einer Außenseite (28) des Lagerschilds (22) ausgebildeten Verbindungskomponente (30) elektrisch gekoppelt ist, wobei die Einbaukomponente (16) als elektrische Bremse (18) des Elektromotors (10) ausgebildet ist.

2. Anordnung (12) nach Anspruch 1, **dadurch gekennzeichnet, dass**
ein Spulenkörper der Bremse (18) mit einem ersten Ende des Spulenkörpers und einem zweiten Ende des Spulenköpers mit der zweiten Steckerkomponente (26) gekoppelt ist.

3. Anordnung (12) nach Anspruch 1 oder 2, **dadurch gekennzeichnet, dass**
die zweite Steckerkomponente (26) innerhalb einer radialen Ausdehnung der Bremse (18) ausgebildet ist.

4. Anordnung (12) nach Anspruch 3, **dadurch gekennzeichnet, dass**
das erste Ende und das zweite Ende direkt mit der zweiten Steckerkomponente (26) gekoppelt sind.

5. Anordnung (12) nach Anspruch 1 oder 2, **dadurch gekennzeichnet, dass**
die zweite Steckerkomponente (26) außerhalb einer radialen Ausdehnung der Bremse (18) ausgebildet ist.

6. Anordnung (12) nach Anspruch 5, **dadurch gekennzeichnet, dass**
die zweite Steckerkomponente (26) über zumindest zwei gekrimpte Leitungen (36) mit einem Spulenkörper der Bremse (18) gekoppelt ist.

7. Anordnung (12) nach einem der Ansprüche 1 bis 6, **dadurch gekennzeichnet, dass**
die Bremse (18) als Feststellbremse für den Elektromotor (10) ausgebildet ist.

8. Anordnung (12) nach einem der Ansprüche 1 bis 7, **dadurch gekennzeichnet, dass**
die Bremse (18) als arbeits- oder ruhestrombetätigte Bremse (18) für den Elektromotor (10) ausgebildet ist.

9. Anordnung (12) nach einem der vorhergehenden Ansprüche, **dadurch gekennzeichnet, dass**
die zweite Steckerkomponente (26) mit zumindest zwei Schneidkontakten (34) ausgebildet ist.

10. Anordnung (12) nach einem der vorhergehenden Ansprüche, **dadurch gekennzeichnet, dass**
die erste Steckerkomponente (24) größer ausgebildet ist, als die zweite Steckerkomponente (26), so dass ein Pufferbereich für ein Einstecken ausgebildet ist.

11. Anordnung (12) nach einem der vorhergehenden Ansprüche, **dadurch gekennzeichnet, dass**
die erste Steckerkomponente (24) mit der Verbindungskomponente (30) über zumindest zwei gekrimpte elektrische Leitungen (32) gekoppelt ist.

12. Anordnung (12) nach einem der vorhergehenden Ansprüche, **dadurch gekennzeichnet, dass**
das Lagerschild (22) eine Durchführung (40) aufweist, wobei die erste Steckerkomponente (24) durch die Durchführung (40) durchgeführt ist.

13. Verfahren zum Herstellen einer Anordnung (12) nach einem der Ansprüche 1 bis 12, mit den Schritten:
- Bereitstellen eines Lagerschilds (22) mit einer ersten Steckerkomponente (24);
- Koppeln der ersten Steckerkomponente (24) mit einer an einer Außenseite (28) des Lagerschilds (22) ausgebildeten Verbindungskomponente (30);
- Bereitstellen einer elektrischen Einbaukomponente (16) der Anordnung (10) mit einer zweiten Steckerkomponente (26), welche mit der ersten Steckerkomponente (24) korrespondiert, wobei die Einbaukomponente (16) als elektrische Bremse (18) eines Elektromotors (10) ausgebildet ist; und
- Automatisiertes Koppeln des Lagerschilds (22) mit der Einbaukomponenten (16) über die Steckerkomponenten (24, 26).
